# EUROPÄISCHE PATENTSCHRIFT

(11) **EP 0 440 958 B1**
(45) Veröffentlichungstag und Bekanntmachung des Hinweises auf die Patenterteilung: **23.11.1994**
(21) Anmeldenummer: 90124845.0
(22) Anmeldetag: 20.12.1990
(51) Int. Cl.: C01G 49/00, C09C 1/22

(54) **Verfahren zur Herstellung eines schwarzen Mangan-Eisenoxid-Pigmentes**
Process for preparing black manganese-iron pigment
Procédé de préparation d' un pigment noir d' oxydes de manganèse-fer

(30) Priorität: 03.02.1990 DE 4003255
(43) Veröffentlichungstag der Anmeldung: 14.08.1991
(73) Patentinhaber: BAYER AG, 51368 Leverkusen (DE)
(72) Erfinder: Kuske, Peter, Dr., W-4150 Krefeld 1 (DE); Buxbaum, Gunter, Dr., W-4150 Krefeld 1 (DE)

(56) Entgegenhaltungen:
- EP-A- 0 176 919
- EP-A- 0 372 335
- DE-A- 2 159 364
- GB-A- 2 151 500
- MATERIALS RESEARCH BULLETIN, Band 20, Nr. 1, Januar 1985, Seiten 85-92, Pergamon Press; T. UTSONOMIYA et al.: "Uniformity of the composition of spinel ferrite particles prepared by air oxidation of hydroxide precursors in suspension"

## Beschreibung

Die vorliegende Erfindung betrifft ein Verfahren zur Herstellung eines schwarzen, im wesentlichen aus Spinell-Mischkristallen der Mischungsreihe Magnetit-Manganferrit bestehenden Pigmentes.

Schwarzpigmente auf der Basis von Magnetit haben sich für viele Anwendungen bewährt und sind nach verschiedenen Verfahren erhältich (ullmanns Encyklopädie der technischen Chemie 4, neu bearbeitete und erweiterte Auflage, Band 18, Anorganische Pigmente, 1979, S. 603). So sind nach dem Fällverfahren gut dispergierbare farbstarke blaustichige Schwarzpigmente herstellbar. Blaustichige Schwarzpigmente sind insbesondere für den Einsatz in Baustoffen wegen ihres tiefschwarzen Farbeindrucks vorteilhaft. Ein wesentlicher Nachteil des Ein- und Zweistufenfällverfahrens zur Herstellung solcher Pigmente (DE-A 26 17 568) besteht darin, daß eine den eingesetzten Alkalien äquivalente Menge Neutralsalz gebildet wird.

Aus der EP-A 0 176 917 und Mat. Res. Bull. 20 (1.) (85-92) gehen Ferrite und deren Einsatz in magnetischen Aufzeichnungsmaterialien hervor. Ein Hinweis auf eine mögliche Eignung dieser Ferrite als Schwarzpigmente in Baustoffen ist diesen Dokumenten nicht zu entnehmen.

Die DE-A 2 159 364 offenbart ein zweistufiges Verfahren zur Herstellung von Pigmenten mit Hämatitstruktur wie beispielsweise β-FeOOH.

Aufgabe der vorliegenden Erfindung ist es daher, ein Verfahren zur Herstellung eines Farbpigmentes mit den positiven Eigenschaften des Fällungs-Magnetits zur Verfügung zu stellen, welches die beschriebenen Nachteile nicht aufweist.

Es wurde nun gefunden, daß farbstarke Schwarzpigmente erhalten werden können, indem Eisen(II)salze in wäßriger Lösung oder Suspension mit Braunstein und oder anderen Mangan in höherer Wertigkeit (+3 bis +7) enthaltenden Oxiden oxidiert werden.

Dies steht im Gegensatz zur Lehre der DE-C 1 767 868, nach der bei Mnhaltigen Mischoxiden die Spinellstruktur für Farbton und Farbstärke schädlich sein soll. Besonders bevorzugt betragen die x-Werte der erfindungsgemäß verwendeten Pigmente 0,3 bis 0,8.

Gegenstand dieser Erfindung ist somit ein Verfahren zur Herstellung eines schwarzen Mangan-Eisenoxid-Pigmentes, welches in Spinellstruktur vorliegt und die allgemeine Zusammensetzung MnₓFe⁺⁺₁₋ₓFe₂³⁺O₄ mit Werten für x von 0,1 bis 0,9 aufweist, gekennzeichnet dadurch, daß
a) Eisen(II)salze oder Mischungen von Eisen(II)salzen und Mangan(II)salzen in Lösung oder nach Umsetzung mit alkalischen Fällungsmitteln mit Manganoxiden einer Zusammensetzung MnOₓ mit 1,7<x<2,1 (Braunstein) und/oder anderen Mangan in höherer Wertigkeit enthaltenden Verbindungen oxidiert werden,
b) zur Einstellung eines Fe(III)-Gehaltes gegebenenfalls zusätzlich mit anderen Oxidationsmitteln, vorzugsweise mit Sauerstoff enthaltenden Gasen, oxidiert wird.
c) das Pigment filtriert, gewaschen, getrocknet und gemahlen wird.

Zur Herstellung von Manganeisenoxiden werden nach dem Stand der Technik Kalzinationsverfahren (z.B. DE-B 1 767 868, DE-A 2 620 953) oder Fällverfahren (US-A 3 822 210, DE-A 3 435 698) angewendet. Nachteil der Kalzinationsverfahren ist die oft beträchtliche Versinterung der Oxide bei der Glühung. Farbstarke Pigmente sind bei diesen Verfahren erst nach aufwendiger Mahlung zu erhalten. Nachteil der Fällverfahren ist eine den eingesetzten Alkalien äquivalente Menge von Neutralsalz:
Neutralisationsverfahren:

Fe₂(SO₄)₃ + MnSO₄ + 8NaOH → MnFe₂O₄ + 4Na₂SO₄ + 4H₂O

Oxidationsverfahren:

2Fe(SO₄) + MnSO₄ + 1/20₂ + 6NaOH→MnFe₂O₄ + 3Na₂SO₄ + 3H₂O

Bei dem erfindungsgemäßen Verfahren dient das Oxidationsmittel teilweise oder vollständig als Manganquelle für die Pigmentbildung. Überraschenderweise wurde gefunden, daß bei diesem Verfahren direkt Phasen mit Spinellstruktur erhalten werden können und daß kein nachgeschalteter Kalzinationsprozess notwendig ist.

Besonders durch die im Vergleich zum Fällverfahren geringeren Mengen an benötigter Natronlauge und an gebildetem Neutralsalz ist das Verfahren besonders ökonomisch und ökologisch vorteilhaft:
Oxidation mit Braunstein (MnO₂):

2FeSO₄ + MnO₂ + 4NaOH → MnFe₂O₄ + 2Na₂SO₄ + 2H₂O

Oxidation mit Hausmannit (Mn₃O₄):

Mn₃O₄ + 2FeSO₄ → MnFe₂O₄ + 2MnSO₄

Oxidation mit Permanganat (KMnO₄):

2KMnO₄ + 10FeSO₄ + 3MnSO₄ + 24NaOH→5MnFe₂O₄ + K₂SO₄ + 12Na₂SO₄ + 12H₂O

Im folgenden soll das erfindungsgemäße Verfahren anhand der Umsetzung mit Braunstein eingehender beschrieben werden.

Die Umsetzung mit Braunstein ist besonders vorteilhaft, da dieser als preiswerter Rohstoff oder auch als Abfallstoff in ausreichenden Mengen zur Verfügung steht. Als Braunstein sollen hierbei alle Manganoxide mit einem Oxidationsgrad x entsprechend einer Zusammensetzung MnOₓ mit x-Werten von 1,7 < x < 2,1 verstanden werden. Diese Braunsteine können größere Mengen Kristallwasser und Fremdkationen enthalten. Sie kristallisieren in verschiedenen Strukturtypen (siehe z.B.: E. Preisler, Chemie in unserer Zeit, 1485), 137-148 (1980).

Bevorzugt wird das erfindungsgemäße Verfahren so durchgeführt, daß Eisen(II)salze in wäßriger Lösung nach Umsetzung mit alkalischen Fällungsmitteln durch Zugabe von Braunstein oxidiert werden, das entstehende Pigment filtriert, gewaschen, getrocknet und gemahlen wird. Die Reaktionstemperaturen können zwischen Raumtemperatur und der Siedetemperatur liegen. Auch Oxidationen bei weiter erhöhtem Druck und Temperatur unter hydrothermalen Bedingungen sind möglich.

Bei den Umsetzungen werden mit steigender Temperatur zunehmend blaustichige Pigmente erhalten. Bevorzugt ist daher eine Oxidation zwischen 80°C und dem Siedepunkt. Weiterhin hat es sich gezeigt, daß die Beschaffenheit der Braunsteine einen großen Einfluß auf Pigmenteigenschaften hat. Blaustichige Schwarzpigmente werden bevorzugt bei Oxidation mit weniger reaktiven Braunsteinen erhalten.

Zur Charakterisierung der Reaktivität der Braunsteine wurde die spezifische Oberfläche nach BET (S_{BET}) in der Ausführungsform der Stickstoffmethode nach DIN 66 131 bestimmt. Außerdem wurden die Umsetzraten durch Titration des Eisen(II)-Gehaltes einer Eisen(II)sulfat-Lösung während der Reaktion mit Braunstein bei einem pH-Wert von 2 bestimmt. Hierzu wurden 0,1 mol des zu untersuchenden Braunsteins mit 0,5 Mol FeSO₄-Lösung (200 g/l) versetzt und der pH-Wert bei 2 konstant gehalten. Die Eisen(II)-Gehalte wurden in Abständen von 5 Minuten nach Filtration der Suspension im Filtrat bestimmt. Als Kriterium für die Reaktivität des Braunsteins wurde der Abbau des Eisen(II)-Gehaltes innerhalb von 15 Minuten herangezogen.

Durch die Verwendung von Braunstein zur Oxidation ist das hier beschriebene Verfahren besonders ökonomisch, da durch die im Vergleich zum klassischen Oxidationsverfahren verringerte Menge an benötigter Luft der Wärmeaustrag insbesondere bei Oxidation nahe des Siedepunktes drastisch reduziert wird.

Die aus dem erfindungsgemäßen Verfahren erhaltenen Pigmente sind tiefschwarz und gut dispergierbar. Sie weisen Teilchendurchmesser von 0,1 bis 1 µm auf und haben spezifische Oberflächen (S_{BET}) von 3-15 m²/g. Als Eisensalze können für die Herstellung die Sulfate und Nitrate, bedingt auch die Chloride eingesetzt werden. Hierbei sind aus Gründen der geringen Korrosivität insbesondere die Sulfate, wie das bei der Titandioxidproduktion anfallende Grünsalz oder auch Beizereisalze, einsetzbar. Braunstein eignet sich sowohl in der Form von Braunsteinerz aus natürlichen Vorkommen als auch in der Form von technischem Braunstein (Chemiebraunstein, Elektrolytbraunstein). Insbesondere sind auch Braunstein enthaltende Abfallprodukte aus chemischen Verfahren (z.B.: Sacharin-Synthese, Zinkraffination) einsetzbar. Besonders bevorzugt eignen sich zur Herstellung von blaustichigen Schwarzpigmenten die weniger reaktiven Braunsteinqualitäten.

Eine weitere bevorzugte Ausführungsform des erfindungsgemäßen Verfahrens besteht darin, daß als Braunstein vorzugsweise Braunsteinerz oder Abfallbraunsteine aus chemischen Verfahren und als Eisensalze vorzugsweise solche aus der TiO₂-Herstellung oder aus Beizereien eingesetzt werden.

Nach der bei Pigmentherstellung üblichen Mahlung, z.B. in Stift-Kugelschwing- oder Strahlmühlen, werden Prüfungen im Bindemittel Alkydal® F 48 (Handelsprodukt der Bayer AG) entsprechend DIN 6174/ISO 7724, 1-3 drafts zur Ermittlung der Farbstärke und des Farbstichs durchgeführt und die CIELAB (C/2-grd.)-Werte in den Beispielen mitgeteilt. Als Vergleich dient hier das Magnetitpigment Bayferrox® 330 (Handelsprodukt der Bayer AG).

Zur weiteren Charakterisierung der Pigmente wird die spezifische Oberfläche nach BET (S_{BET}) in der Ausführungsform der Stickstoff-1-Punkt-Methode nach DIN 66 131 herangezogen.

Im folgenden soll die Erfindung anhand von Beispielen weiter erläutert werden, ohne daß hierin eine Einschränkung zu sehen ist.

Für die Versuche wurden die folgenden Braunsteinqualitäten eingesetzt:

| Braunstein Nr. | Gehalt MnO₂ % | Reaktivität mol FeSO₄ min⁻¹1⁻¹ | BET m²/g |
|---|---|---|---|
| 1 Braunstein-Erz | 85,5 | 0,86 | 21 |
| 2 Chemiebraunstein | 81 | 0,62 | 5 |
| 3 Abfall-Braunstein | 16* | 0,93 | 25** |

| | | | |
|---|---|---|---|
| * Feuchter Filterkuchen | | | |
| ** getrocknet 100°C | | | |

### Beispiel 1

In einem mit Begasungsrührer versehenen Rührbehälter wurden 6,27 l FeSO₄-Lösung (200 g/l) vorgelegt, mit 6 l destilliertem Wasser versetzt und unter Rühren 1000 ml Natronlauge (650 g/l) zugegeben. Nach dem Aufheizen auf 95°C wurde die im wesentlichen aus Fe(OH)₂ bestehende Fällung durch Zugabe von 224 g des Braunsteins Nr. 2 innerhalb von sechs Stunden oxidiert. Zur Vermeidung von Luftoxidation wurde mit Stickstoff begast. Nach beendeter Reaktion wurde die schwarze Suspension abgesaugt, das Pigment gewaschen und im Umlufttrockenschrank getrocknet. Nach Analyse enthält das Produkt etwa 2 % nicht umgesetzten Braunstein und eine Ferritphase der Zusammensetzung Mn_{0,55}Fe_{2,45}O₄. Die spezifische Oberfläche beträgt 8,4 m² /g.

Das getrocknete Pigment aus Beispiel 1 wurde in einer Kugelschwingmühle Typ Dismembrator R für 1 Minute mit Achatkugeln gemahlen. Anschließend wurde die Farbstärke, wie bereits oben beschrieben, in Alkydallack F 48 gegen Bayferrox 330® = 100% bestimmt (siehe Tabelle 1). Der Blaustich Δb* ist für Werte von Δb* ≦ 0 akzeptabel.

### Beispiel 2:

Im 30 l Rührkessel wurden 6 l destilliertes Wasser vorgelegt und bei 95°C unter Rühren kontinuierlich 448 g des Braunsteins Nr. 2, 1 l NaOH (650 g/l) sowie 6,27 l FeSO₄ (200 g/l) zugegeben. Nach einer Reaktionszeit von 8 Stunden wurde das Pigment wie im Beispiel 1 aufgearbeitet. Nach Analyse enthält das Produkt etwa 5% Braunstein in nicht umgesetzter Form sowie eine Ferritphase der Zusammensetzung Mn_{0,8}Fe_{2,2}O₄.

Die spezifische Oberfläche wurde zu 9,3 m²/g bestimmt. Die Farbdaten sind in Tabelle 1 aufgeführt.

### Beispiel 3:

Es wurde entsprechend zum Beispiel 2 gearbeitet, allerdings wurden 212 g des Braunsteins Nr. 1 eingesetzt. Die Zugabe des Braunsteins erfolgte in 10 Portionen von 21 g innerhalb von 5 Stunden. Hiernach wurde für 2 Stunden mit 200 l Luft/h begast. Nach Analyse besteht das Produkt aus einer Ferritphase der Zusammensetzung Mn_{0,6}Fe_{2,4}O₄. Die spezifische Oberfläche beträgt 7,1 m²/g. Die Farbdaten sind in Tabelle 1 aufgeführt.

**Tabelle 1**

| Farbdaten der Beispiele 1 - 3 | | | | |
|---|---|---|---|---|
| Beispiel | FS% | Δa* | Δb* | Δc* |
| 1 | 133 | -0,1 | 0 | 0 |
| 2 | 85 | -0,2 | -0,4 | 0,4 |
| 3 | 130 | -0,1 | -0,5 | 0,5 |
| Bayferrox® 330 | 100 | 0 | 0 | 0 |

## Patentansprüche

1. Verfahren zur Herstellung eines schwarzen Mangan-Eisenoxid-Pigmentes, welches in Spinellstruktur vorliegt und die allgemeine Zusammensetzung MnₓFe⁺⁺₁₋ₓFe₂³⁺O₄ mit Werten für x von 0,1 bis 0,9 aufweist, gekennzeichnet dadurch, daß
a) Eisen(II)salze oder Mischungen von Eisen(II)salzen und Mangan(II)salzen in Lösung oder nach Umsetzung mit alkalischen Fällungsmitteln mit Manganoxiden einer Zusammensetzung MnOₓ mit 1,7<x<2,1 (Braunstein) und/oder anderen Mangan in höherer Wertigkeit enthaltenden Verbindungen oxidiert werden,
b) zur Einstellung eines Fe(III)-Gehaltes gegebenenfalls zusätzlich mit anderen Oxidationsmitteln, vorzugsweise mit Sauerstoff enthaltenden Gasen, oxidiert wird,
c) das Pigment filtriert, gewaschen, getrocknet und gemahlen wird.

2. Verfahren gemäß Anspruch 1, dadurch gekennzeichnet, daß die Oxidation bei Temperaturen zwischen Raumtemperatur und dem Siedepunkt, vorzugsweise zwischen 80 °C und der Siedetemperatur, durchgeführt wird.

3. Verfahren gemäß Anspruch 1, dadurch gekennzeichnet, daß zur Oxidation vorzugsweise Braunstein eingesetzt wird.

4. Verfahren gemäß einem oder mehrerer der Ansprüche 1 bis 3, dadurch gekennzeichnet, daß zur Herstellung von blaustichigen Schwarzpigmenten bevorzugt weniger reaktiver Braunsteinqualitäten verwendet werden.

5. Verfahren gemäß einem oder mehrerer der Ansprüche 1 bis 4, dadurch gekennzeichnet, daß als Braunstein vorzugsweise Braunsteinerz oder Abfallbraunsteine aus chemischen Verfahren und als Eisensalze vorzugsweise solche aus der TiO₂-Herstellung oder aus Beizereien engesetzt werden.

## Claims

1. A process for the production of a black manganese/iron oxide pigment which is present in spinel structure and has the general composition MnₓFe⁺⁺₁₋ₓFe₂O₄ with values for x of 0.1 to 0.9, characterized in that
a) iron(II) salts or mixtures of iron(II) salts and manganese(II) salts are oxidized - in solution or after reaction with alkaline precipitants - with manganese oxides of the composition MnOₓ with 1.7 < x < 2.1 (pyrolusite) and/or other compounds containing manganese in relatively high valency,
b) to establish an Fe(III) content in the pigment, oxidation is additionally carried out with other oxidizing agents, preferably with oxygen-containing gases,
c) the pigment is filtered, washed, dried and ground.

2. A process as claimed in claim 1, characterized in that the oxidation is carried out at temperatures between room temperature and the boiling point and preferably at temperatures between 80°C and the boiling temperature.

3. A process as claimed in claim 1, characterized in that pyrolusite is preferably used for the oxidation.

4. A process as claimed in one or more of claims 1 to 3, characterized in that less reactive pyrolusites are preferably used for the production of black pigments with a bluish tinge.

5. A process as claimed in one or more of claims 1 to 4, characterized in that pyrolusite ore or waste pyrolusites from chemical processes are preferably used as the pyrolusite while iron salts from the production of TiO₂ or from pickling plants are preferably used as the iron salts.

## Revendications

1. Procédé de production d'un pigment noir d'oxyde de fer-manganèse ayant une structure de type spinelle et présentant la composition générale MnₓFe₁₋ₓFe₂³⁺O₄, pour des valeurs de x comprises entre 0,1 et 0,9, caractérisé en ce que :
a) des sels de fer (II) ou des mélanges de sels de fer (II) et de sels de manganèse (II) sont oxydés en solution ou après réaction avec des agents de précipitation alcalins, à l'aide d'oxydes de manganèse de composition MnOₓ pour 1,7 <x<2,1 (pyrolusite) et/ou d'autres composés contenant du manganèse de valent relativement élevée,
b) on oxyde en outre le cas échéant à l'aide d'autres oxydants, de préférence à l'aide de gaz contenant de l'oxygène, pour ajuster la teneur en Fe (III),
c) le pigment est filtré, lavé, séché et broyé.

2. Procédé selon la revendication 1, caractérisé en ce l'oxydation s'effectue à des températures comprises entre la température ambiante et le point d'ébullition, de préférence entre 80°C et la température d'ébullition.

3. Procédé selon la revendication 1, caractérisé en ce qu'on utilise de préférence de la pyrolusite pour l'oxydation.

4. Procédé selon une ou plusieurs des revendications 1 à 3, caractérisé en ce qu'on utilise de préférence des qualités de pyrolusite peu réactives pour produire des pigments noirs tirant sur le bleu.

5. Procédé selon une ou plusieurs des revendications 1 à 4, caractérisé en ce qu'on utilise comme pyrolusite de préférence du minerai de pyrolusite ou des pyrolusites déchets provenant de procédés chimiques et comme sels de fer de préférence ceux provenant de la fabrication de TiO₂ ou d'installations de décapage.
